# EUROPEAN PATENT APPLICATION

(11) **EP 4 650 140 A2**
(43) Date of publication of application: **19.11.2025**
(21) Application number: 25172464.7
(22) Date of filing: 25.04.2025
(51) Int. Cl.: B29C 45/00, H01M 50/211, H01M 50/507, H01M 50/569, H01M 10/04, H01M 10/48

(54) **SENSING BLOCK TO PREVENT DAMAGE TO ELECTRODE LEAD**

(30) Priority: 26.04.2024 KR 20240056346
(71) Applicant: Valeo Kapec Co., Ltd., Daegu 42709 (KR)
(72) Inventor: CHON, Kyuyeol, Dalseo-gu, Daegu 42709 (KR); WOO, Cheolgyu, Dalseo-gu, Daegu 42709 (KR); NAM, Kyungwook, Dalseo-gu, Daegu 42709 (KR); KIM, Jungjin, Dalseo-gu, Daegu 42709 (KR); YEO, Hyungdong, Dalseo-gu, Daegu 42709 (KR); UEM, Subin, Dalseo-gu, Daegu 42709 (KR); OH, Haejin, Dalseo-gu, Daegu 42709 (KR)
(74) Representative: Isarpatent

(57) **Abstract**

Provided is a structure of a battery module (1) including: a battery cell (11) including an electrode lead (110) protruding and extending forward; a sensing block (12) arranged in front of the battery cell and having a slit (120) through which the electrode lead passes forward and rearward; and a bus bar (13) mounted on a front portion of the sensing block and on one side in a width direction of the slit, wherein the electrode lead is bent toward one side in the width direction at a bent portion located forward of the slit and is connected to the bus bar, the sensing block includes a first flat surface (121), a second flat surface (122), and a stepped portion (124), and a boundary where the inner peripheral surface of the slit and the first flat surface meet is formed as a corner having an internal angle of 90 degrees or less.

## Description

### TECHNICAL FIELD

The present invention relates to a structure of a battery module including a sensing block configured to prevent damage to an electrode lead and to allow easy manufacturing, and a structure of an injection mold for manufacturing the sensing block.

### BACKGROUND ART

A secondary battery is a rechargeable battery, and due to its high energy density and various application possibilities, it is used in portable devices, automobiles, and power storage systems that require a power supply.

The secondary battery includes, as its basic unit, battery cells having various structures, such as cylindrical, prismatic, and pouch types. Such battery cells may be embedded in a device either individually or in the form of a plurality of connected cells. In particular, electric vehicles and hybrid vehicles are vehicles that use electric power as their driving source and require high output and capacity, so it is common to embed a battery module in which a plurality of battery cells are integrated.

In a battery module, the plurality of battery cells may be connected in series and/or in parallel with each other by having their electrode leads connected to a conductive bus bar. In this case, the bus bar is usually mounted on an insulating sensing block to which sensors that monitor a temperature, a voltage, and the like are connected. One of the most widely used sensing block structures is a structure including a plurality of slits, through which electrode leads pass forward and rearward, and a bus bar mounted on a front surface portion. In such a structure, the electrode leads pass through the slits and are then bent to be connected to the bus bar.

Note that, in this structure, there is a risk that the electrode lead may be damaged due to excessive bending or pressure caused by a sharp corner formed between the slit and a front surface of the sensing block. To prevent this, a method of rounding the corner has been proposed.

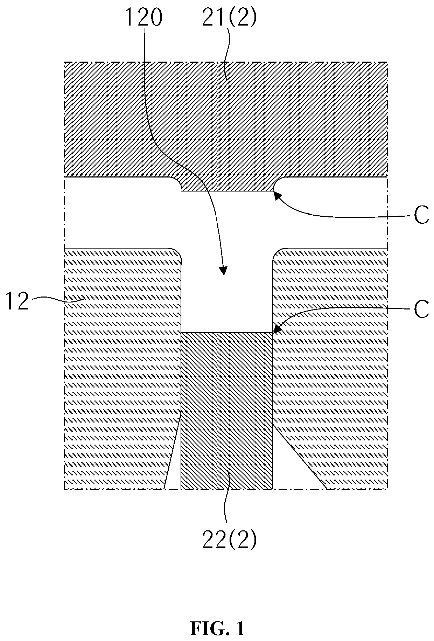

FIG. 1 shows a sensing block with a rounded boundary between a slit and a front surface portion, and an injection mold for injection molding the sensing block. Referring to FIG. 1, an injection mold 2 is used to injection-mold a sensing block 12 including a slit 120.

Since the slit 120 has sections in which a width becomes wider toward the front and rear, the mold 2 for injection molding the sensing block 12 needs to be divided into a first mold 21 and a second mold 22. In this case, the first mold 21 and the second mold 22 are coupled so that their respective corner portions C correspond to each other. In this case, if the corner portions C are not smoothly connected, a sharp burr may be formed, which may damage an electrode lead.

However, it requires a high degree of precision to mate the mold 2 so that the corner portions C are smoothly connected to each other. In addition, when the corner portions C repeatedly come into contact with each other in this manner, a replacement cycle of the mold 2 is shortened due to wear of the corner portions C.

### SUMMARY

The present invention has been made in view of the situations of the related art, and an object thereof is to provide a structure of a battery module configured to prevent damage to an electrode lead due to a sharp corner portion formed in a sensing block.

Another object of the present invention is to provide a structure of an injection mold, which is easy to mate and highly durable, for use in injection molding a sensing block configured to prevent damage to an electrode lead.

The technical problems of the present invention are not limited to the objects described above, and other objects and advantages of the present invention that are not described above can be understood by the following description and will be more clearly understood by the embodiments of the present invention. In addition, it will be readily understood that the objects and advantages of the present invention can be realized by means set forth in the claims and combinations thereof.

In order to achieve the above objects, the present invention provides a structure of a battery module including a battery cell including: an electrode lead protruding and extending forward; a sensing block arranged in front of the battery cell and having a slit through which the electrode lead passes forward and rearward; and a bus bar mounted on a front portion of the sensing block and on one side in a width direction of the slit, wherein the electrode lead is bent toward one side in the width direction at a bent portion located forward of the slit and is connected to the bus bar, the sensing block includes a first flat surface connected to one side in the width direction of an inner peripheral surface of the slit, a second flat surface on which the bus bar is mounted, the second flat surface protruding forward from one side in the width direction of the first flat surface, and a stepped portion provided between the first flat surface and the second flat surface, and a boundary where the inner peripheral surface of the slit and the first flat surface meet is formed as a corner having an internal angle of 90 degrees or less.

According to an exemplary embodiment of the present invention, since a plurality of corners where the sensing block can come into contact with the electrode lead are formed, damage to the electrode lead can be prevented.

For ease of manufacturing, the first flat surface preferably faces substantially forward.

The sensing block may include a third flat surface parallel to the first flat surface and connected to the other side in the width direction of the inner peripheral surface of the slit. In this case, it is easier to manufacture when the first flat surface and the third flat surface lie on one virtual plane.

In order to prevent damage to the electrode lead due to sharp corners, it is preferable that an internal angle of the corner where the inner peripheral surface of the slit and the first flat surface meet is 60 to 90 degrees.

The stepped portion may be provided in plurality. As the number of the stepped portions increases, the numbers of portions where the electrode lead can come into contact with the sensing block also increases, and thus damage to the electrode lead can be further prevented.

A boundary where the stepped portion and the second flat surface meet may be formed as a corner having a predetermined internal angle. In this case, in order to prevent damage to the electrode lead due to a sharp corner, the boundary where the stepped portion and the second flat surface meet is preferably formed as a corner having an internal angle of 90 degrees or more.

However, if the internal angle is excessively large, the electrode lead may not come into contact with the corner at all. Accordingly, the internal angle of the corner where the stepped portion and the second flat surface meet is preferably 90 to 150 degrees.

Alternatively, the boundary where the stepped portion and the second flat surface meet may be rounded rather than forming an angled corner.

The stepped portion may lie on a shortest path between an end portion on one side in the width direction of the slit and a front surface of the bus bar. Accordingly, a possibility that the electrode lead comes into contact with the sensing block at a plurality of locations increases.

In order to enable removal of a first mold described below, the slit preferably does not include a section where a width of the slit increases toward the front.
The present invention also provides a structure of an injection mold for injection molding the sensing block, including: a first mold including a first protrusion having a first outer peripheral surface and a first tip end surface; and a second mold including a second protrusion having a second outer peripheral surface and a second tip end surface and a base end surface, and configured to be coupled with the first mold, wherein the first tip end surface and the second tip end surface face each other and meet on one virtual plane, and an end portion on one side in the width direction of the second tip end surface further protrudes toward one side in the width direction than an end portion on one side in the width direction of the first tip end surface.

According to an exemplary embodiment of the present invention, since an end portion on one side in the width direction of the second tip end surface further protrudes toward one side in the width direction than an end portion on one side in the width direction of the first tip end surface, the first mold and the second mold may be coupled such that a corner portion of the first protrusion comes into contact with the second tip end surface. In this case, since the normal directions of the first outer peripheral surface and the second tip end surface intersect with each other, wear of the mold caused by contact between corner portions can be prevented.

According to an exemplary embodiment of the present invention, the first outer peripheral surface may correspond to the inner peripheral surface of the slit, the second outer peripheral surface may correspond to the stepped portion, and the first flat surface may be formed by the second tip end surface. In this case, as the first outer peripheral surface and the second tip end surface intersect each other, the boundary between the inner peripheral surface of the slit and the first flat surface may be formed as a corner having a predetermined internal angle.

For ease of manufacturing and/or symmetry, normal directions of the first tip end surface and the second tip end surface are preferably substantially parallel to a coupling direction of the first mold and the second mold.

For the same reason as the end portion on one side in the width direction of the second tip end surface further protruding toward one side in the width direction than the end portion on one side in the width direction of the first tip end surface, an end portion on the other side in the width direction of the second tip end surface may also further protrude toward the other side in the width direction than an end portion on the other side in the width direction of the first tip end surface.

A boundary where the first outer peripheral surface and the first tip end surface meet may be formed as a corner having a predetermined internal angle. In this case, if the internal angle is an acute angle, the first mold cannot be removed. Additionally, if the internal angle is excessively large, the sensing block is formed with a sharp corner, which may damage the electrode lead. Accordingly, the boundary where the first outer peripheral surface and the first tip end surface meet is preferably formed as a corner having an internal angle of 90 to 150 degrees.

A boundary where the second outer peripheral surface and the base end surface meet may be formed as a corner having a predetermined internal angle. In this case, if the internal angle is greater than 270 degrees, the second mold cannot be removed, and the sensing block is formed with a sharp corner, which may damage the electrode lead. Accordingly, the boundary where the second outer peripheral surface and the base end surface meet may be formed as a corner having an internal angle of 180 to 270 degrees.

Alternatively, the boundary where the second outer peripheral surface and the base end surface meet may be rounded. Accordingly, damage to the electrode lead can be prevented.

The present invention can provide a structure of a battery module that includes a sensing block having a stepped portion to prevent damage to an electrode lead caused by excessive bending or pressure.

The present invention can also provide a structure of an injection mold for injection molding a sensing block, which implements a shape for preventing damage to an electrode lead, while not requiring excessive precision in mating and having high wear resistance, thereby extending a replacement cycle.

In addition to the effects described above, specific effects of the present invention will be described below together with specific matters for implementing the invention.

### BRIEF DESCRIPTION OF THE DRAWINGS

FIG. 1 shows a sensing block with a rounded boundary between a slit and a front surface portion, and an injection mold for injection molding the sensing block.
FIGS. 2 and 3 show a structure of a battery module according to an exemplary embodiment of the present invention.
FIGS. 4 and 5 show a cross-sectional view and a main portion of the battery module according to an exemplary embodiment of the present invention.
FIGS. 6 and 7 show a main portion of a sensing block and a corresponding shape of an injection mold according to an exemplary embodiment of the present invention.

### DETAILED DESCRIPTION

Hereinafter, preferred exemplary embodiments of the present invention will be described in detail with reference to the accompanying drawings.

The present invention is not limited to the exemplary embodiments disclosed below, but may be modified in various manners and implemented in various different forms. The exemplary embodiments are merely provided to complete the disclosure of the present invention and to fully convey the scope of the invention to those skilled in the art. Therefore, it should be understood that the present invention is not limited to the exemplary embodiments disclosed below, but the configuration of any one exemplary embodiment and the configuration of another exemplary embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of components may be exaggerated, increased, or decreased for ease of understanding, but the protection scope of the present invention should not be restrictively construed.

The terms used in the present specification are used only for the purpose of describing particular implementations or exemplary embodiments and are not intended to limit the present invention. Further, singular expressions include plural expressions unless clearly described as different meanings in the context. In the present application, the terms "comprises," "comprising," "includes," "including," "containing," "has," "having", and other variations thereof are inclusive and therefore specify the presence of features, integers, steps, operations, components, parts, and/or combinations thereof disclosed in the specification. That is, in the present application, the terms "comprises," "comprising," "includes," "including," "containing," "has," "having", and other variations thereof do not preclude the presence or addition of one or more other features, integers, steps, operations, components, parts, and/or combinations thereof.

The terms including ordinal numbers such as "first," "second," and the like may be used to describe various components, but the components are not limited by the terms. The terms are used only to discriminate one component from another component.

When one component is described as being "coupled" or "connected" to another component, it should be understood that one component may be coupled or connected directly to another component, and an intervening component may also be present between the components. On the other hand, when one component is described as being "coupled directly to" or "in direct contact with" another component, it should be understood that no intervening component is present between the components.

When one component is described as being "on" or "below" another component, it should be understood that one component may be arranged directly on another component, and an intervening component may also be present between the components.

Unless otherwise defined, all terms used herein, including technical or scientific terms, have the same meanings as commonly understood by those skilled in the art to which the present invention pertains. Terms, such as those defined in commonly used dictionaries, should be interpreted as having meanings consistent with meanings in the context of related technologies and should not be interpreted as ideal or overly formal meanings unless explicitly defined in the present application.

The present exemplary embodiment provides structures of a battery module and a sensing block constituting the battery module.

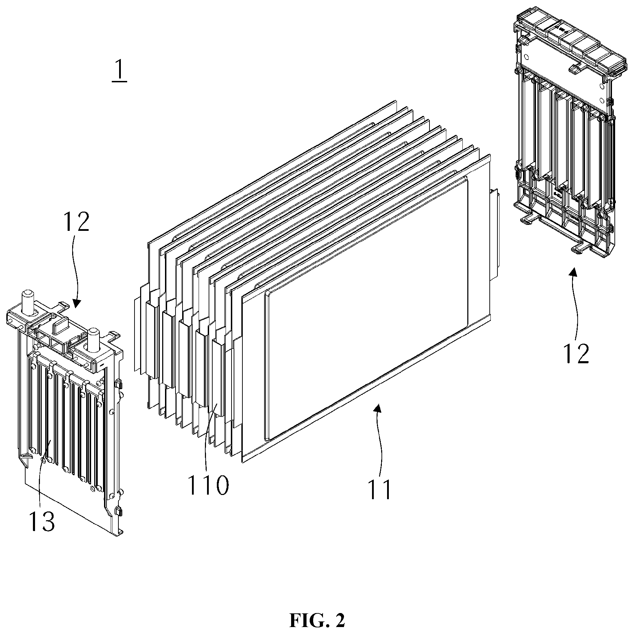

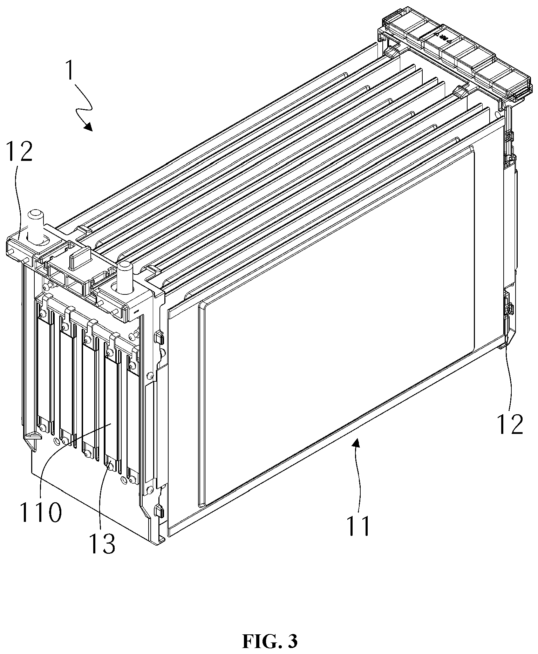

FIGS. 2 and 3 shows a structure of a battery module according to an exemplary embodiment of the present invention. Referring to FIGS. 2 and 3, a battery module 1 according to an exemplary embodiment of the present invention may include battery cells 11, a sensing block 12 arranged in front of the battery cells 11, and bus bars 13 mounted on a front portion of the sensing block 12.

The battery cell 11 may be a pouch-type battery cell including a pouch that accommodates an electrode assembly or a stack in which a plurality of battery cells are stacked in a width direction, but is not limited thereto.

An electrode lead 110 may protrude and extend from the battery cell 11. The electrode lead 110 may extend forward.

The sensing block 12 may have a plate-like shape that covers a front portion of the battery cell 11. The sensing block 12 preferably includes an insulating material. For example, the sensing block 12 may include a synthetic resin injection-molded product.

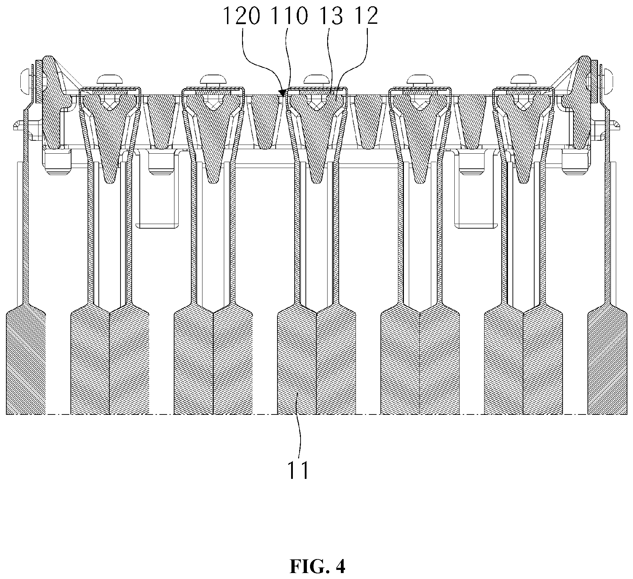

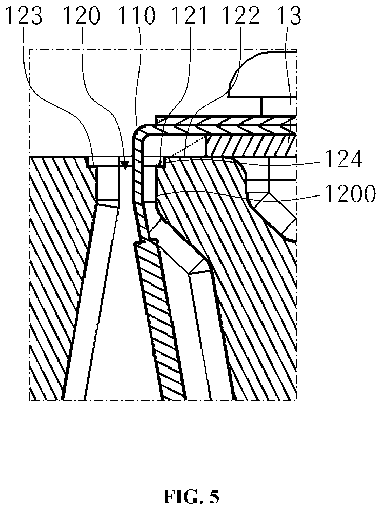

FIGS. 4 and 5 show a cross-sectional view and a main portion of the battery module according to an exemplary embodiment of the present invention. Referring to FIGS. 4 and 5, the sensing block 12 may be provided with slits 120 through which the electrode leads 110 pass forward and rearward.

The electrode lead 110 and the slit 120 may each have a vertically extending shape with a small thickness.

The bus bar 13 may be mounted on a front surface of the sensing block 12. In particular, the bus bar 13 may be mounted on one side in a width direction of the slit 120.

The electrode lead 110 may be bent toward one side in the width direction and connected to the bus bar 13 after passing through the slit 120.

The sensing block 12 may include a first flat surface 121 connected to an inner peripheral surface 1200 of the slit 120 on one side in the width direction. The normal direction of the first flat surface 121 may be substantially oriented forward.

A boundary where the inner peripheral surface 1200 of the slit 120 and the first flat surface 121 meet may be formed as a corner having a predetermined internal angle. In this case, in order to prevent damage to the electrode lead 110 caused by a sharp corner, the internal angle is preferably 60 degrees or more.

The sensing block 12 may include a second flat surface 122 protruding forward from one side in the width direction of the first flat surface 121.

As the second flat surface 122 further protrudes forward than the first flat surface 121, a stepped portion 124 may be provided between the first flat surface 121 and the second flat surface 122.

According to the present exemplary embodiment, even if the battery cell 11 is deformed due to swelling or the like and the electrode lead 110 is pulled taut, the electrode lead 110 can come into contact with the sensing block 12 at a plurality of locations. Specifically, the electrode lead 110 may be supported by the sensing block 12 at the boundary between the inner peripheral surface 1200 of the slit 120 and the first flat surface 121, and the boundary between the stepped portion 124 and the second flat surface 122. Accordingly, the electrode lead 110 may not be damaged by a sharp corner formed in the sensing block 12.

The stepped portion 124 may be provided in plurality. When the stepped portion 124 is provided in plurality, the number of points where the electrode lead 110 can be supported increases, so that damage to the electrode lead 110 can be prevented.

The stepped portion 124 may lie on a shortest path between an end portion on one side in the width direction of the slit 120 and a front surface of the bus bar 13. Accordingly, a possibility that the electrode lead 110 comes into contact with the sensing block 12 at a plurality of locations increases.

According to the present exemplary embodiment, the boundary where the stepped portion 124 and the second flat surface 122 meet may be formed as a corner having a predetermined internal angle. In this case, in order to prevent damage to the electrode lead 110 caused by a sharp corner, the internal angle is preferably 90 degrees or more. However, if the internal angle is excessively large, the electrode lead 110 may not come into contact with the corner at all. Accordingly, the internal angle is preferably 150 degrees or less.

In one variation, the boundary where the stepped portion 124 and the second flat surface 122 meet may be rounded. In this case, damage to the electrode lead 110 due to the corner formed in the sensing block 12 can be further prevented.

The sensing block 12 may include a third flat surface 123 that is parallel to the first flat surface 121 and connected to the other side in the width direction of the inner peripheral surface 1200 of the slit 120. In this case, as described below, it is easier to manufacture when the first flat surface 121 and the third flat surface 123 lie on one virtual plane.

The present exemplary embodiment also provides a structure of an injection mold for injection molding the sensing block 12.

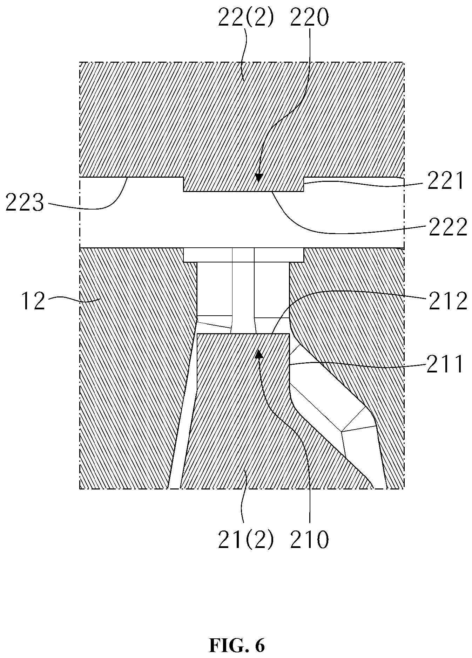

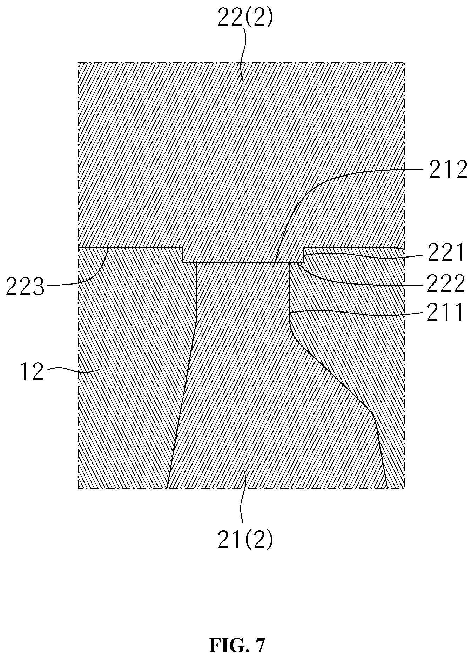

FIGS. 6 and 7 show a main portion of a sensing block and a corresponding shape of an injection mold according to an exemplary embodiment of the present invention.
Referring to FIGS. 6 and 7, an injection mold 2 according to an exemplary embodiment of the present invention may include a first mold 21 including a first protrusion 210, and a second mold 22 including a second protrusion 220 and a base end surface 223.

The first protrusion 210 may include a first outer peripheral surface 211 and a second tip end surface 222.

The second protrusion 220 may include a second outer peripheral surface 221 and a second tip end surface 222.

The first mold 21 and the second mold 22 may be coupled to each other in a coupling direction corresponding to the front-rear direction of the sensing block 12. In this case, the first tip end surface 212 and the second tip end surface 222 may face each other and meet on one virtual plane. The normal direction of the virtual plane is preferably substantially parallel to the coupling direction.

In this case, one end portion or both end portions in the width direction of the second tip end surface 222 may further protrude toward one side or both sides in the width direction than one end portion or both end portions of the first tip end surface 212. Accordingly, the first mold 21 and the second mold 22 do not meet each other at corner portions, so the wear resistance of the mold 2 can be improved. Specifically, the first mold 21 and the second mold 22 may be coupled such that the first outer peripheral surface 211 and the second tip end surface 222 intersect with each other.

Referring to FIGS. 5 to 7, when the sensing block 12 is injection-molded by the mold 2, the inner peripheral surface 1200 of the slit 120 may be formed by the first outer peripheral surface 211, the first flat surface 121 and/or the third flat surface 123 may be formed by the second tip end surface 222, and the stepped portion 124 and the second flat surface 122 may be formed by the second outer peripheral surface 221 and the base end surface 223.

In order to enable removal of the first mold 21 from the sensing block 12, each of the first protrusion 210 and the slit 120 may not include a section in which a width thereof increases toward the front. For example, according to the present exemplary embodiment, each of the first protrusion 210 and the slit 120 may include a tapered section in which a width decreases toward the front.

The boundary where the first outer peripheral surface 211 and the first tip end surface 212 meet may be formed as a corner having a predetermined internal angle. In order to prevent damage to the electrode lead 110 due to a sharp corner between the slit 120 and the first flat surface 121 while enabling the removal of the first mold 21, the internal angle is preferably 90 to 150 degrees.

The boundary where the second outer peripheral surface 221 and the base end surface 223 meet may be formed as a corner having a predetermined internal angle. In order to enable removal of the second mold 22, the internal angle is preferably 180 to 270 degrees.

In one variation, the boundary where the second outer peripheral surface 221 and the base end surface 223 meet may be rounded.

While the present invention has been described above with reference to the accompanying drawings, the present invention is not limited to the drawings and the exemplary embodiments disclosed in the present specification, and it is apparent that the present invention may be variously modified by those skilled in the art without departing from the technical spirit of the present invention. Further, even though the operational effects of the configurations of the present invention have not been explicitly disclosed and described in the description of the exemplary embodiments of the present invention, the effects, which can be expected by the corresponding configurations, should, of course, be acceptable.

### [Explanation of Reference Numerals and Symbols]

1: battery module 11: battery cell 110: electrode lead12: sensing block 120: slit 1200: inner peripheral surface 121: first flat surface 122: second flat surface 123: third flat surface 124: stepped portion 13: bus bar 2: mold 21: first mold 210: first protrusion 211: first outer peripheral surface 212: first tip end surface 22: second mold 220: second protrusion 221: second outer peripheral surface 222: second tip end surface 223: base end surface C: corner portion

## Claims

1. A battery module comprising:
a battery cell comprising an electrode lead protruding and extending forward;
a sensing block arranged in front of the battery cell and having a slit through which the electrode lead passes forward and rearward; and
a bus bar mounted on a front portion of the sensing block and on one side in a width direction of the slit, wherein
the electrode lead is bent toward one side in the width direction at a bent portion located forward of the slit and is connected to the bus bar,
the sensing block comprises
a first flat surface connected to one side in the width direction of an inner peripheral surface of the slit,
a second flat surface on which the bus bar is mounted, the second flat surface protruding forward from one side in the width direction of the first flat surface, and
a stepped portion provided between the first flat surface and the second flat surface, and
a boundary where the inner peripheral surface of the slit and the first flat surface meet is formed as a corner having an internal angle of 90 degrees or less.

2. The battery module of claim 1, wherein the first flat surface faces substantially forward.

3. The battery module of claim 1, wherein the sensing block comprises a third flat surface parallel to the first flat surface and connected to the other side in the width direction of the inner peripheral surface of the slit.

4. The battery module of claim 3, wherein the first flat surface and the third flat surface lie on one virtual plane.

5. The battery module of claim 1, wherein the stepped portion is provided in plurality.

6. The battery module of claim 1, wherein a boundary where the stepped portion and the second flat surface meet is formed as a corner having an internal angle of 90 degrees or greater.

7. The battery module of claim 1, wherein a boundary where the stepped portion and the second flat surface meet is rounded.

8. The battery module of claim 1, wherein the stepped portion lies on a shortest path between an end portion on one side in the width direction of the slit and a front surface of the bus bar.

9. The battery module of claim 1, wherein the slit does not comprise a section in which a width of the slit increases toward the front.

10. An injection mold for injection molding a sensing block, the injection molding comprising:
a first mold comprising a first protrusion having a first outer peripheral surface and a first tip end surface; and
a second mold including a second protrusion having a second outer peripheral surface and a second tip end surface and a base end surface, and configured to be coupled with the first mold, wherein
the first tip end surface and the second tip end surface face each other and meet on one virtual plane, and
an end portion on one side in a width direction of the second tip end surface further protrudes toward one side in the width direction than an end portion on one side in the width direction of the first tip end surface.

11. The injection mold of claim 10, wherein normal directions of the first tip end surface and the second tip end surface are substantially parallel to a coupling direction of the first mold and the second mold.

12. The injection mold of claim 10, wherein an end portion on the other side in the width direction of the second tip end surface further protrudes toward the other side in the width direction than an end portion on the other side in the width direction of the first tip end surface.

13. The injection mold of claim 10, wherein a boundary where the first outer peripheral surface and the first tip end surface meet is formed as a corner having an internal angle of 90 to 150 degrees.

14. The injection mold of claim 10, wherein a boundary where the second outer peripheral surface and the base end surface meet is formed as a corner having an internal angle of 180 to 270 degrees.

15. The injection mold of claim 10, wherein a boundary where the second outer peripheral surface and the base end surface meet is rounded.
